# FASCICULE DE BREVET EUROPEEN

(11) **EP 3 145 636 B1**
(45) Date de publication et mention de la délivrance du brevet: **26.01.2022**
(21) Numéro de dépôt: 15732794.1
(22) Date de dépôt: 22.05.2015
(51) Int. Cl.: B03B 9/06, B09B 3/00, B09B 5/00, C05F 17/00, C05F 9/02, C05F 17/10, C05F 17/50, C05F 17/979, C05F 17/986, C05F 17/90

(54) **PROCÉDÉ DE TRAITEMENT D'UN MELANGE DE DÉCHETS À DEUX CYCLES DE COMPOSTAGE**
VERFAHREN ZUR BEHANDLUNG EINES ABFALLGEMISCHS MIT ZWEI KOMPOSTIERUNGSZYKLEN
METHOD FOR TREATING A MIXTURE OF WASTE, HAVING TWO COMPOSTING CYCLES

(30) Priorité: 23.05.2014 FR 1454696
(43) Date de publication de la demande: 29.03.2017
(73) Titulaire: Finance Developpement Environnement Charreyre - FIDEC, 43000 Polignac (FR)
(72) Inventeur: CHARREYRE, Fabien, Michel, Alain, 43270 Allegre (FR)
(74) Mandataire: Weber, Jean-François
(86) Numéro de dépôt international: PCT/FR2015/051371
(87) Numéro de publication internationale: WO 2015/177486

(56) Documents cités:
- WO-A1-2007/098610
- WO-A1-2010/012877
- KR-A- 20120 033 437
- US-A- 6 093 323
- Anonymous: "Municipal Solid Waste Composting Fact Sheet - Physical Processing", , 31 December 2013 (2013-12-31), XP055733793, Retrieved from the Internet: URL:http://compost.css.cornell.edu/MSWFact Sheets/msw.fs1.html [retrieved on 2020-09-24]

## Description

### DOMAINE TECHNIQUE

La présente invention concerne le domaine du traitement des déchets, en particulier le traitement des déchets biodégradables pour leur recyclage et leur valorisation, notamment sous forme de compost.

L'invention concerne plus précisément un procédé de traitement d'un mélange de déchets, ces derniers étant de tailles, de formes et de consistances hétéroclites, le mélange de déchets comprenant des déchets biodégradables et des déchets non biodégradables.

Est divulguée également une installation de traitement d'un mélange de déchets, ces derniers étant de tailles, de formes et de consistances hétéroclites, le mélange de déchets comprenant des déchets biodégradables et des déchets non biodégradables.

### TECHNIQUE ANTERIEURE

De façon traditionnelle, la valorisation des déchets organiques, généralement biodégradables, peut être effectuée par compostage. Le compostage incarne l'accélération du processus naturel de décomposition de la matière biologique et/ou organique, et permet de transformer des déchets sans valeur en du compost, qui est stable, hygiénique, riche en composés humiques. Le compost peut être utilisé ensuite pour l'agriculture, pour améliorer la structure des sols, et contribuer à leur fertilisation tout en augmentant la biodiversité.

A l'échelle industrielle, il est ainsi possible d'effectuer le compostage des déchets organiques contenus dans les déchets ménagers pour permettre leur valorisation, ce qui permet avantageusement d'éviter leur enfouissement ou leur incinération, ces deux dernières solutions étant particulièrement néfastes pour l'environnement, et de nature à polluer l'air et les sols.

Néanmoins, les procédés de compostage industriels connus nécessitent un tri des déchets ménagers, lesquels contiennent une proportion très importante de déchets indésirables et inappropriés au compostage, comme par exemple des métaux, des matières plastiques (incluant notamment des matières plastiques chlorées tel que le PVC) et d'autres matériaux inertes, qu'il est nécessaire de séparer du mélange de déchets ménagers.

Il est connu de demander aux ménages générant les déchets ménagers de trier, ou au moins pré-trier, par eux-mêmes leurs déchets ménagers. Il est dès lors nécessaire d'organiser une collecte sélective des déchets destinés au compostage, et des autres déchets, par exemple destinés au recyclage, à l'incinération ou à l'enfouissement. Cependant, malgré la prise de conscience progressive des ménages à l'égard du tri et de ses conséquences bénéfiques pour l'environnement, un tel tri ou pré-tri ne saurait, la plupart du temps, être considéré comme fiable. En effet, les ménages ou les collectivités peuvent être dans l'impossibilité de trier les déchets convenablement, ce qui nécessite en particulier des infrastructures adaptées (plusieurs bacs de collecte de déchets, l'organisation d'une collecte sélective), parfois coûteuses, encombrantes, et génératrices de trafic supplémentaire. En outre, les ménages peuvent ne pas être en mesure d'effectuer le tri correctement, par exemple par méconnaissance de la nature précise des déchets et des possibilités éventuelles de valorisation de ces derniers, ou encore par absence de volonté d'effectuer le tri.

La plupart du temps, il est donc nécessaire de trier à nouveau les déchets avant leur compostage industriel, afin d'en extraire une portion effectivement adaptée au compostage, ce qui est particulièrement difficile et coûteux, du fait de la nature même des déchets, qui sont très hétérogènes, et mélangés. Il est en particulier difficile d'extraire d'un mélange de déchets la matière organique à composter qu'il contient, car cette dernière est généralement collante, salissante, porteuse de maladies et nauséabonde.

En définitive, de manière pratique, la majeure partie des déchets pouvant faire l'objet d'un compostage sont effectivement incinérés ou enfouis.

Le document WO-2007/098610A1 a trait à un procédé qui consiste à mélanger les déchets à un agent gonflant tel que de l'écorce, à éliminer la matière inorganique de plus grande taille, puis à composter le reste en utilisant des bactéries de compostage et de l'air forcé pour favoriser le compostage.

Le document WO-2010/012877A1 concerne un procédé de traitement de déchets comprenant des matières organiques et des matières inorganiques, dans lequel on sépare lesdits déchets en une fraction majoritairement organique et en une fraction majoritairement inorganique, puis on soumet ladite fraction majoritairement organique à un traitement biologique.

### EXPOSE DE L'INVENTION

Les objets assignés à la présente invention visent en conséquence à remédier aux différents inconvénients énumérés précédemment et à proposer un nouveau procédé de traitement d'un mélange de déchets permettant de valoriser une portion très importante du mélange de déchets, en particulier n'ayant pas ou peu subis un tri préalable.

Un autre objet de l'invention vise à proposer un nouveau procédé de traitement d'un mélange de déchets permettant de valoriser sélectivement une ou plusieurs portions du mélange de déchets en dépit de l'hétérogénéité dudit mélange de déchets.

Un autre objet de l'invention vise à proposer un nouveau procédé de traitement d'un mélange de déchets permettant de produire des déchets affinés, du genre compost, de bonne qualité à partir du mélange de déchets.

Un autre objet de l'invention vise à proposer un nouveau procédé de traitement d'un mélange de déchets étant peu polluants et sans impact négatif sur l'environnement.

Un autre objet de l'invention vise à proposer un nouveau procédé de traitement d'un mélange de déchets dont la consommation en ressources et en énergie est particulièrement faible.

Un autre objet de l'invention vise à proposer un nouveau procédé de traitement d'un mélange de déchets étant peu coûteux et faciles à mettre en œuvre.

Un autre objet de l'invention vise à proposer un nouveau procédé de traitement d'un mélange de déchets permettant de réduire la quantité d'infrastructures de collecte et de traitement des déchets des collectivités.

Un autre objet de l'invention vise à proposer un nouveau procédé de traitement d'un mélange de déchets permettant de simplifier l'organisation de la collecte des déchets par les collectivités, les entreprises et les ménages.

Un autre objet de l'invention vise à proposer un nouveau procédé de traitement d'un mélange de déchets permettant un traitement du mélange de déchets de façon majoritairement, voire totalement automatisée.

Les objets assignés à l'invention sont atteints à l'aide d'un procédé de traitement d'un mélange de déchets, conforme à l'objet de la revendication 1.

Est également divulguée une installation de traitement d'un mélange de déchets, ces derniers étant de tailles, de formes et de consistances hétéroclites, le mélange de déchets comprenant des déchets biodégradables et des déchets non biodégradables, l'installation étant caractérisée en ce qu'elle comprend :
- au moins une première baie de compostage permettant de faire subir un premier cycle de compostage au mélange de déchets de manière à composter au moins en partie les déchets biodégradables dudit mélange de déchets, et à obtenir un mélange de déchets pré-compostés,
- au moins une baie de séchage du mélange de déchets pré-compostés, permettant d'obtenir un mélange de déchets séchés,
- des moyens de séparation du mélange de déchets séchés au moins en une portion de déchets lourds et une portion de déchets légers, la portion de déchets lourds étant sensiblement formée par des déchets de masse volumique plus élevée que les déchets de la portion de déchets légers,
- au moins une deuxième baie de compostage permettant de faire subir un deuxième cycle de compostage à la portion de déchets légers de manière à composter au moins en partie les déchets biodégradables qu'elle contient, et à obtenir un mélange de déchets affinés.

### DESCRIPTIF SOMMAIRE DES DESSINS

D'autres particularités et avantages de l'invention apparaîtront et ressortiront plus en détails à la lecture de la description faite ci-après, en référence aux dessins annexés, donnés uniquement à titre d'exemple illustratif et non limitatif, dans lesquels :

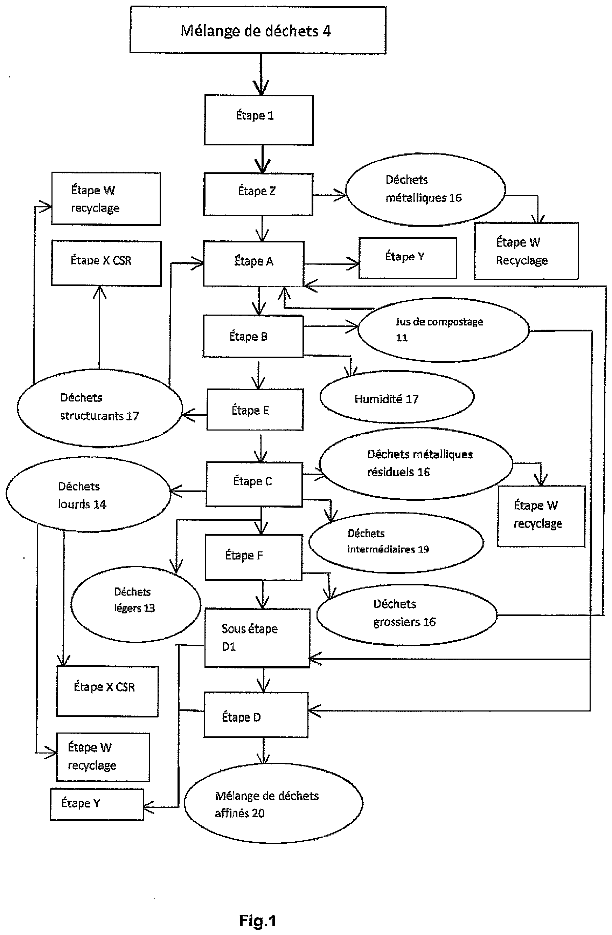

- La figure 1 est un arbre orienté représentant les différentes étapes du procédé de traitement d'un mélange de déchets selon l'invention, ainsi que leur enchaînement temporel, incluant en particulier des étapes A, B, C et D dudit procédé de traitement.
- La figure 2 est un arbre orienté représentant plus en détails le déroulement de l'étape C de la figure 1.
- La figure 3 illustre, selon une de côté, une coupe longitudinale d'un moyen de séparation incluant un séparateur à tapis balistique, appartenant à une installation de traitement d'un mélange de déchets.
- La figure 4 représente, selon une vue en perspective, le moyen de séparation de la figure 3.
- La figure 5 illustre, selon une vue en perspective, une coupe longitudinale d'une baie de séchage/compostage appartenant à l'installation de traitement des figures 3 et 4.

### MEILLEURE MANIERE DE REALISER L'INVENTION

L'invention concerne un procédé de traitement d'un mélange de déchets 4, visant à raffiner, valoriser et/ou recycler tout ou partie de ce dernier, et en particulier des déchets biodégradables qu'il contient.

Le mélange de déchets 4 est préférentiellement formé par des déchets ménagers, mais peut aussi être formé par des déchets d'activités économiques ou industrielles, ou les deux, lesdits déchets n'ayant subi aucun tri, ni broyage préalables.

Ce mélange de déchets 4 est ainsi avantageusement formé de déchets générés par des ménages, lors de la consommation et de la vie quotidienne de ces derniers.

De préférence, le mélange de déchets 4 n'a subi aucun traitement et forme un mélange de déchets 4 brut. En particulier, n'a été effectué aucun broyage du mélange de déchets brut, ni aucun tri préalable visant à effectuer une ségrégation d'un type de déchet par rapport à un autre, et notamment à effectuer une séparation de déchets biodégradables et de déchets recyclables non biodégradables. De préférence, le mélange de déchets 4 a été collecté, par exemple à l'aide de camions poubelles, auprès des ménages et/ou des activités économiques sans que lesdits ménages et/ou lesdites activités économiques aient effectué un tri ou sélection préalable des déchets collectés. En particulier, la collecte du mélange de déchets 4 n'a pas été sélective. Ainsi, selon une variante particulièrement intéressante de l'invention, le procédé de l'invention est un procédé de traitement d'un mélange de déchets brut non broyés.

Selon l'invention, le procédé de traitement est de la sorte caractérisé en ce que le mélange de déchets 4 n'a subi aucun traitement et forme un mélange de déchets 4 brut, sur lequel en particulier n'a été effectué aucun broyage, ni aucun tri préalables visant à effectuer une ségrégation d'un type de déchet par rapport à un autre, et notamment à effectuer une séparation de déchets biodégradables et de déchets recyclables non biodégradables.

Bien entendu, sans sortir du cadre de l'invention, le mélange de déchets 4 pourra au contraire avoir été dépouillé d'une portion des déchets recyclables qu'il contient, par exemple par les ménages à l'occasion d'un pré-tri, ou avoir fait lui-même l'objet d'un pré-tri, par exemple par les ménages.

Les déchets du mélange de déchets 4 sont avantageusement collectés de façon brute et indifférenciée, mélangés dans des sacs, du genre sacs poubelle plastique fermés par les ménages, le procédé comportant une étape préliminaire d'ouverture desdits sacs afin de libérer les déchets qu'ils contiennent de façon individuelle pour former le mélange de déchets 4 mis en œuvre dans le procédé de l'invention, qui est un regroupement des déchets initialement contenu dans lesdits sacs. L'ouverture des sacs de déchets peut être effectuée par exemple à l'aide d'un dispositif d'ouverture de sacs, pour permettre la libération des déchets hors desdits sacs, de préférence sans abîmer ou altérer lesdits déchets.

Notamment du fait de l'absence de tri préalable avant l'entrée du mélange de déchets 4 dans le procédé de traitement de l'invention, les déchets sont de tailles, de formes et de consistances hétéroclites, de préférence de nature et d'origine variées. Le mélange de déchets 4 ainsi considéré pourra notamment comprendre à la fois des déchets mous, durs, coupants, liquides, poudreux, solides, plats, creux, pleins, collants, glissants, gras, cassants, flexibles, compressibles, incompressibles, combustibles, incombustibles ou encore cumulant plusieurs de ces caractéristiques. Le mélange de déchets 4 contient en majorité des éléments usagés et indésirables, par exemple des déchets alimentaires, des journaux, des papiers, des cartons, du verre, du plastique, du métal, des textiles, des combustibles et incombustibles divers, des matériaux complexes, des déchets dangereux des ménages, des déchets inertes, des encombrants.

Selon l'invention, le mélange de déchets 4 comprend des déchets biodégradables et des déchets non biodégradables, les déchets biodégradables formant avantageusement une portion non négligeable du mélange de déchets 4.

De manière avantageuse, au moins 10 %, de préférence au moins 20 %, de la masse du mélange de déchets 4 est formée par des déchets biodégradables, et au moins 10 %, de préférence au moins 20 %, de la masse du mélange est formée par des déchets recyclables non biodégradables.

De façon préférentielle, une portion non négligeable de la masse du mélange de déchets 4 est formée par des déchets biodégradables, par exemple au moins 50 % de la masse du mélange de déchets, voire au moins 60 %, voire au moins 80 %. De préférence, une portion non négligeable de la masse du mélange de déchets 4 est formée quant à elle par des déchets recyclables non biodégradables.

Au sens de l'invention, on entend par « *déchet biodégradable* » un déchet qui, sous l'action d'un milieu naturel, comprenant par exemple des organismes vivants et/ou de l'air et/ou de l'eau, peut naturellement et spontanément se décomposer en éléments divers susceptibles de dommages au milieu naturel (forte demande en oxygène, émission de lixiviats) à défaut d'avoir été stabilisés par exemple par compostage. Les organismes vivants peuvent en particulier être formés par des micro-organismes comme des bactéries, des champignons ou des algues, qui sont de nature à dégrader les déchets biodégradables à l'aide de réactions biochimiques. On entend de préférence par « *déchets biodégradables* » des déchets qui peuvent être dégradés de cette manière à l'échelle temporelle d'une vie humaine, d'une décennie, ou plus préférentiellement d'une année ou de quelques mois, de façon préférée de quelques semaines. On entend de préférence par « *déchets biodégradables* » des déchets susceptibles d'entrer dans la fabrication et la formation de compost par compostage de ces derniers.

Les déchets « *non biodégradables* », au sens de l'invention, forment les autres déchets, qui ne subissent pas spontanément et naturellement une telle dégradation, ou qui la subissent de façon trop lente. Les déchets « *non biodégradables* », sont en particulier inadaptés pour entrer dans la formation de compost par compostage de ces derniers.

Un déchet « *recyclable* », au sens de l'invention, forme un déchet qui peut être facilement transformé par exemple chimiquement ou mécaniquement, pour former une matière recyclée semblable à une matière première, qui peut entrer par exemple dans la fabrication d'un objet. Le terme « *déchet recyclable* » exclut de préférence les déchets biodégradables, même si leur transformation en compost leur confère en pratique un caractère recyclable. Au sens de l'invention, les déchets recyclables pourront comprendre par exemple :
- des déchets non métalliques, en particulier des polymères, du verre, des papiers, du carton, des journaux, gravats, bois, textile, électronique, etc.
- des déchets métalliques, formés par tout type de métaux.

Au sens de l'invention, le terme « *déchets non recyclable* » fait référence à tout déchet n'entrant pas dans les catégories décrites ci-dessus des « *déchets recyclables* » et des « *déchets biodégradables* ». En particulier, les déchets non recyclables regroupent notamment des déchets présentant un pouvoir calorifique qui les rend susceptibles d'être transformés en combustibles solides de récupération, et d'autres déchets ultimes inutilisables (déchets complexes, etc.) destinés par exemple à l'enfouissement ou à l'incinération.

Le procédé de traitement de l'invention vise ainsi à valoriser la masse de déchets mélangés formant le mélange de déchets 4, et en particulier à convertir notamment les déchets biodégradables qu'il contient en un mélange de déchets 4 affinés 20, de manière à ce que, de préférence, le mélange de déchets 4 affinés 20 forme du compost. De préférence, le mélange de déchets 4 affinés 20 forme du compost satisfaisant à la norme NF U 44-051. La norme NF U 44-051 de 2006, dénommée « *Amendements organiques* - *Dénominations*, *spécifications et marquage* », est une norme française.

Selon une caractéristique importante de l'invention, le procédé de traitement comporte les étapes successives suivantes :
- Étape A : on fait subir un premier cycle de compostage au mélange de déchets 4 de manière à composter au moins en partie les déchets biodégradables dudit mélange de déchets 4, et à obtenir un mélange de déchets 4 pré-compostés,
- Étape B : on fait subir un séchage au mélange de déchets 4 pré-compostés pour obtenir un mélange de déchets 4 séchés,
- Étape C : on sépare le mélange de déchets 4 séchés en au moins une portion de déchets lourds 14 et une portion de déchets légers 13, la portion de déchets lourds 14 étant formée par des déchets de masse volumique plus élevée que les déchets de la portion de déchets légers 13,
- Étape D : on fait subir un deuxième cycle de compostage à la portion de déchets légers 13 de manière à composter au moins en partie les déchets biodégradables qu'elle contient, et à obtenir un mélange de déchets 4 affinés 20.

Le procédé de traitement de l'invention inclut le traitement du mélange de déchets 4 par deux cycles de compostage successifs séparés par une étape de séchage du mélange de déchets 4 à l'issue du premier cycle de compostage pour faciliter la séparation et l'affinage plus facile du mélange de déchets 4. Ainsi, même si le mélange de déchets 4 est particulièrement hétéroclite et présente de nombreux indésirables non susceptibles d'être traités par compostage, il est possible d'affiner ce dernier à l'aide du procédé de l'invention pour obtenir des déchets affinés 20 dont la valeur est supérieure à celle du mélange de déchet initial.

De manière avantageuse, le procédé est un procédé industriel dans lequel les étapes sont effectuées à la chaîne et en parallèle les unes des autres. Par exemple, alors qu'un premier mélange de déchets 4 subit l'étape A, un autre mélange de déchets 4 subit simultanément l'étape B alors qu'il a déjà subi l'étape A préalablement.

Au sens de l'invention, on entend par « *compostage* » un processus biologique de conversion et de valorisation des déchets organiques, et notamment des déchets biodégradables contenus dans le mélange de déchets 4, en favorisant et/ou en accélérant le processus naturel de biodégradation. Les cycles de compostages du procédé de l'invention permettent préférentiellement de convertir au moins une portion du mélange de déchets 4 initial en un produit stabilisé, hygiénique, riche en composés humiques, de préférence en compost. On entend par « *compostage* » un compostage par exemple traditionnel ou industriel, mettant en œuvre notamment une action de micro-organismes pour dégrader et putréfier des déchets du mélange de déchets 4, ces micro-organismes étant naturellement présents dans le mélange de déchets 4 et/ou ajoutés au mélange de déchets 4, et/ou amenés à se multiplier dans le mélange de déchets 4. Le compostage de l'invention met en œuvre en particulier une aération du mélange de déchets 4, et/ou une régulation de l'humidité du mélange de déchets 4 (par exemple par adjonction d'eau au mélange de déchets 4 et/ou par réintroduction dans le mélange de déchets 4 de jus de compostage 11 émis par ce dernier), et/ou une adjonction de micro-organismes au mélange de déchets 4 et/ou une adjonction de structurants 17 pour stimuler le processus de compostage, et/ou un apport de lumière, par exemple solaire.

Préférentiellement, l'étape A correspond à, ou comprend, une phase de dégradation des déchets, notamment biodégradables, alors que l'étape C correspond à, ou comprend, une phase de maturation des déchets, notamment biodégradables, pour obtenir le mélange de déchets 4 affinés 20, ce dernier formant avantageusement du compost. La phase de dégradation se traduit avantageusement par une prolifération des micro-organismes dans le mélange de déchets 4, alors que la phase de maturation se traduit préférentiellement par la diminution progressive de la quantité de micro-organismes ayant proliféré lors de la phase de dégradation, et la conservation de micro-organismes bénéfiques pour les sols. Les phases de dégradation et de maturations peuvent se chevaucher ou même être confondues.

Selon l'invention, au cours de l'étape A, le premier cycle de compostage permet le compostage de la portion biodégradable du mélange de déchets 4, alors que, bien entendu, les déchets non biodégradables restent sensiblement inaltérés, et servent en particulier de structurants 17 au processus de compostage, les déchets structurants 17 étant voués notamment à l'amélioration de la circulation de l'air au sein du mélange de déchets 4 en cours de compostage, pour permettre d'améliorer le compostage aérobie.

Le premier cycle de compostage de l'étape A, tout comme le deuxième cycle de compostage de l'étape D, s'effectue avantageusement de façon aérobie. Pour cela, on aère préférentiellement le mélange de déchets 4 à composter, en particulier à l'aide d'une circulation d'un flux d'air traversant le mélange de déchets 4 à composter, ou par remuage du mélange de déchets 4.

On apporte de préférence une source de lumière 5 au mélange de déchets 4 pour améliorer son compostage, par exemple une source de lumière 5 naturelle, et/ou une source de lumière 5 artificielle.

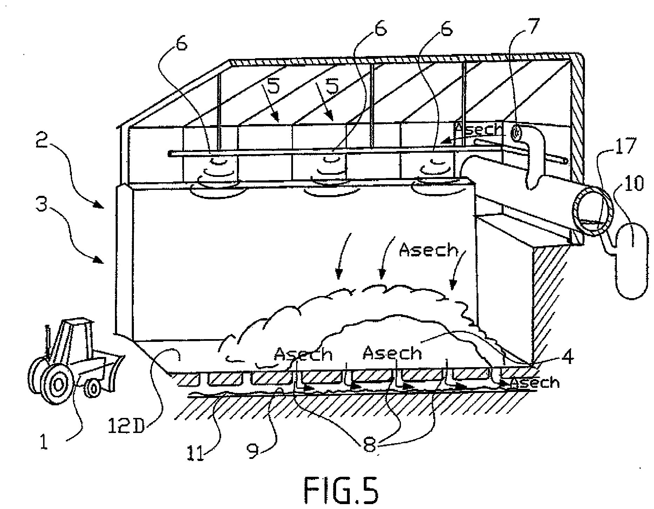

De manière avantageuse, lors de l'étape A et/ou de l'étape D et/ou de l'étape B, le mélange de déchets 4 concerné est disposé en tas que l'on retourne à plusieurs reprises, par exemple à l'aide d'une chargeuse 1 adaptée, afin de contribuer à aérer les déchets (tel qu'illustré par exemple à la figure 5). De préférence, au cours de l'étape A, le mélange de déchets 4 est disposé dans au moins une première baie de compostage 3, par exemple en tas. De préférence également, cours de l'étape D, les déchets de la portion de déchets légers 13 sont disposés dans au moins une deuxième baie de compostage 3.

De façon préférentielle, au cours de l'étape A, et/ou au cours de l'étape D, on humidifie le mélange de déchets 4 concerné à l'aide de sources d'humidité 6, les sources d'humidité 6 étant par exemple formées par des dispositifs d'arrosage ou rampes d'arrosage dont sont équipées les premières et/ou deuxièmes baies de compostage, les tas étant destinés à être arrosés par les dispositifs d'arrosage, lesdits dispositifs d'arrosage étant par exemple disposés au dessus desdits tas.

On opère ainsi avantageusement une régulation de l'humidité du mélange de compostage lors des cycles de compostage.

Le procédé comporte avantageusement une étape Y au cours de laquelle on récupère des jus de compostage 11 suintant du mélange de déchets pour alimenter les sources d'humidité 6.

De préférence l'étape Y peut également inclure un captage d'eau de pluie pour alimenter les sources d'humidité 6, ce qui permet notamment de diminuer la consommation éventuelle d'eau courante, en particulier potable, du procédé.

De préférence, préalablement à l'étape A, le procédé comporte une étape 1 au cours de laquelle on sépare du mélange de déchets 4 une deuxième fraction de déchets dont la taille est supérieure à 110 mm. Les déchets de taille supérieure ont dès lors été avantageusement séparés du mélange de déchets 4 à l'aide d'une machine de tri du genre trommel rotatif. En particulier, les déchets de la deuxième fraction de déchets sont de masse volumique moins importante au regard des déchets restant dans le mélange de déchets 4. Une telle ségrégation permet en particulier d'augmenter la concentration du mélange de déchets 4 en déchets biodégradables, en séparant du mélange de déchets 4 initial les déchets plus massifs. On entend par « *taille* » d'un déchet, une dimension géométrique caractéristique du déchet individuel, qui lui permet par exemple de passer au travers d'une maille de taille correspondante si la taille du déchet est inférieure à la taille de la maille, ou au contraire de ne pas passer si la taille dudit déchet est supérieure à la taille de ladite maille.

De préférence, avant l'étape A, et en particulier après l'étape 1, le mélange de déchets 4 contient une proportion majoritaire de déchets humides et/ou collants, formés notamment par des déchets biodégradables, ou pour le moins adaptés au compostage. Leur caractère collant et/ou humide facilite avantageusement leur séparation de la deuxième fraction de déchets par la machine de tri.

De façon préférentielle, préalablement à l'étape A, le procédé comporte une étape Z au cours de laquelle on sépare des déchets métalliques 16 contenus dans le mélange de déchets 4, par exemple à l'aide d'un séparateur électromagnétique et/ou d'un séparateur à courant de Foucault, de façon à séparer au moins !a majorité desdits déchets métalliques 16 contenus dans le mélange de déchets 4. Le mélange de déchets 4 destiné au premier cycle de compostage est ainsi dénué de la majeure partie des déchets métalliques 16 qu'il contenait, et notamment ceux dont la taille et/ou la masse est importante, de sorte que le processus de compostage du premier cycle de compostage est favorisé et accéléré. Les déchets métalliques 16 ainsi séparés dans l'étape Z pourront avantageusement faire l'objet d'une étape W de recyclage.

Selon l'invention, l'étape B, effectuée après l'étape A pour le mélange de déchets 4 considéré, permet de retirer tout ou partie de l'humidité 6 du mélange de déchets 4 pré-compostés au cours de ladite étape A. Tel qu'illustré à la figure 5, pour ce faire, le mélange de déchets 4 pré-compostés par exemple disposé en tas dans au moins une, sinon plusieurs, baies de séchage, et soumis à un séchage. L'étape B comprend préférentiellement une sous-étape B1 de mise en circulation d'un flux d'air séchant A_{sech} à travers ledit mélange de déchets 4 pré-compostés pour sécher ce dernier, le flux d'air séchant A_{sech} traversant à cet effet de préférence le tas de déchets de part en part. L'air séchant A_{sech} est avantageusement formé par un courant d'air sec et chauffé à une température comprise entre 40°C et 90°C, de préférence 70°C, et qui est de nature à entraîner, lors de son passage dans le mélange de déchets 4 pré-compostés, l'humidité 6 contenue dans ce dernier. De façon préférentielle, la circulation du flux d'air séchant A_{sech} s'effectue verticalement, de préférence du haut vers la bas, ou sinon du bas vers le haut. Ainsi, on génère une aspiration d'air 8 séchant sous le tas de déchets pré-compostés.

De préférence, pour mettre en œuvre l'étape B, le mélange de déchets 4 pré-compostés est disposé en tas dans des baies de séchage, par exemple à même le sol de ces dernières. Pour contribuer au séchage dudit mélange de déchets 4 pré-compostés, le procédé comprend de retourner le tas à une ou plusieurs reprises.

De façon préférentielle, et dans un but d'économie des ressources naturelles, on récupère au moins une portion de l'humidité 6 contenue dans le mélange de déchets 4 pré-compostés au cours de l'étape B, et on alimente les sources d'humidité 6 avec la portion de l'humidité 6 ainsi récupérée.

De préférence, l'humidité 6 du mélange de déchets 4 pré-compostés est ainsi retirée de ce dernier au cours de l'étape B pour être réintroduite ensuite dans la portion de déchets légers 13 de l'étape D, de sorte que cette humidité n'est pas gaspillée, et est réutilisée, au moins en partie.

En particulier, on récupère tout ou partie des jus de compostage 11 émanant du mélange de déchets 4 pré-compostés en cours de séchage, par exemple par drainage de ces derniers à l'aide d'un moyen de drainage 9 de la baie de séchage 2. Ces jus de compostage 11 sont avantageusement stockés, et transportés pour être réintroduits ultérieurement dans la mise en oeuvre de premiers et deuxièmes cycles de compostages. Les jus de compostage 11 comportant notamment de l'eau, des micro-organismes et d'autres éléments utiles au bon déroulement d'un compostage, leur réintroduction par l'intermédiaire des sources d'humidité 6 dans un mélange de déchets 4 à composter permet une amélioration du compostage de ce dernier tout en réduisant la nécessité d'apporter de l'extérieur l'eau, les micro-organismes et les autres éléments utiles au bon déroulement du compostage.

De façon avantageuse, on met l'air séchant A_{sech} en circulation au moins à l'aide d'un soufflage d'air 7 effectué au dessus du mélange de déchets 4, de sorte que l'air séchant A_{sech} draine l'humidité 6 du mélange de déchets 4 pré-compostés, l'étape de récupération de la portion d'humidité étant effectuée au moins en partie par condensation de l'humidité 6 provenant du mélange de déchets 4 pré-compostés et drainée par le flux d'air séchant A_{sech}.

En l'espèce, chaque baie de séchage 2 comprend également, de préférence, des moyens de mise en circulation d'air séchant A_{sech} au travers du mélange de déchets 4 pour le sécher ce dernier, les moyens de mise en circulation incluant au moins :
- des moyens de soufflage d'air 7 au dessus du mélange de déchets 4 pré-compostés,
- des moyens de d'aspiration d'air 8 séchant en dessous du mélange de déchets 4 pré-compostés.

De plus, chaque baie de séchage 2 comprend avantageusement un récupérateur 10 d'une portion de l'humidité 6 contenue dans le mélange de déchets 4 pré-compostés lors du séchage de ce dernier, le récupérateur 10 d'humidité permettant d'alimenter les sources d'humidité 6 avec l'humidité 6 récupérée lors du séchage desdits déchets pré-compostés.

De façon préférentielle, on traite le flux d'air séchant A_{sech} ayant circulé au travers du mélange de déchets 4 pré-compostés pour le décharger sensiblement de toute émission de compostage, notamment odorante, à l'aide par exemple d'un filtrage, ou d'un traitement biochimique. A cet effet, la ou les baie(s) de séchage comprend préférentiellement des moyens de traitement de l'air séchant A_{sech} ayant circulé au travers du mélange de déchets 4 pré-compostés pour le décharger sensiblement de toute émission de compostage, notamment odorante. De manière générale, les émissions d'air et de polluants éventuels liées à la mise en œuvre du procédé de traitement sont avantageusement traitées de cette manière, ce qui permet au procédé d'être sensiblement non polluant et de ne pas générer d'odeurs.

De manière avantageuse, à l'issue de l'étape B et préalablement à l'étape C, ledit procédé comporte une étape E au cours de laquelle on sépare du mélange de déchets 4 séchés une portion de déchets dont la taille est supérieure à environ 30 mm, dits déchets structurants 17, qu'ils soient des déchets biodégradables ou non, compostés ou non, et on ajuste la concentration en déchets structurants 17 d'un deuxième mélange de déchets 4 subissant l'étape A en y adjoignant la portion de déchets structurants 17 ainsi séparée du mélange de déchets 4 séchés, de manière notamment à structurer et ensemencer le premier cycle de compostage. La séparation des déchets structurants 17 est avantageusement effectuée à l'aide d'un trommel rotatif dont la maille permet la ségrégation d'objets dont la taille est supérieure à environ 30 mm, et d'objets dont la taille est inférieure à environ 30 mm. On réutilise ainsi avantageusement les déchets structurants 17 du mélange de déchets 4 séchés pour améliorer un premier cycle de compostage en cours ou ultérieur d'un autre mélange de déchets 4. De cette manière, il n'est pas ou peu nécessaire d'adjoindre, pour le premier cycle de compostage, des structurants 17 provenant d'une source extérieure au procédé de traitement. On réintroduit avantageusement une portion plus ou moins grande des déchets structurants 17 récupérés dans le mélange de déchets 4 subissant l'étape A de manière à ajuster, en faisant l'appoint, la concentration en structurants 17 dudit mélange de déchets 4 jusqu'à une valeur prédéterminée, préférentiellement propre à améliorer le premier cycle de compostage. Les déchets structurants 17 récupérés qui ne sont pas réintroduits pourront de préférence faire l'objet d'un tri, par exemple manuel ou à l'aide d'une machine du genre trommel rotatif, de manière à séparer des déchets recyclables, que l'on recycle, et des déchets non recyclables, auxquels on fait subir une étape X de fabrication de combustible solide de récupération (CSR), ou un autre type de retraitement du genre enfouissement ou incinération. En effet, il est possible, à ce stade du procédé, d'envisager de faire entrer une portion du mélange de déchets 4 séchés dans l'étape X de fabrication de combustible solide de récupération, dans la mesure où les déchets sont séchés sont suffisamment secs, et en particulier d'une humidité intrinsèque inférieure à environ 10%.

Selon l'invention, on sépare tout ou partie des éléments indésirables à la formation du mélange de déchets affinés 20 final au cours de l'étape C. Cette séparation est facilitée par le fait que, à ce stade du procédé, tout ou partie des déchets biodégradables ont subi le premier cycle de compostage, de sorte à être compostés, au moins de manière partielle, et que ces mêmes déchets biodégradables sont secs, et donc en particulier non collants, disséminés sous forme de poudre ou de gravier de pré-compost qui adhère de façon moins importante aux déchets non biodégradables. Ces déchets biodégradables pré-compostés et secs, en outre, présentent avantageusement, pour la plus grande partie d'entre eux, une masse volumique peu élevée et distincte du reste des déchets du mélange de déchets 4 séchés. Ainsi, au cours de l'étape C, la portion de déchets légers 13 comprend une concentration majoritaire de déchets biodégradables susceptibles d'être transformés en compost. Il est ainsi plus aisé d'effectuer une sélection des déchets susceptibles de former le mélange de déchets 4 affinés 20 parmi le mélange de déchets 4, qui était initialement relativement hétéroclite.

L'étape C et l'étape E sont préférentiellement réalisées à l'aide de moyens de séparation du mélange de déchets 4 séchés au moins en une portion de déchets lourds 14 et une portion de déchets légers 13, la portion de déchets lourds 14 étant sensiblement formée par des déchets de masse volumique plus élevée que les déchets de la portion de déchets légers 13. Les moyens de séparation incluent avantageusement également le trommel associé à l'étape E. Le trommel associé à l'étape E pourra optionnellement être équipé d'une brosse permettant de nettoyer la portion de déchets légers 13 par frottement, afin d'en séparer les déchets susmentionnés.

De préférence, la portion de déchets légers 13 séparés au cours de l'étape C présente une masse volumique inférieure à environ 0,7 kg/L, de préférence inférieure à environ 0,6 kg/L, le compost sec présentant généralement une masse volumique proche de 0,5 kg/L. Les matières plastiques présentant une masse volumique le plus souvent supérieure à 0,8 kg/L peuvent ainsi facilement être séparées de la portion de déchets légers 13. On peut ainsi avantageusement séparer de la portion de déchets légers 13 les matières plastiques, dont les matières plastiques chlorées comme les polychlorures de vinyles (PVC), de sorte que le mélange de déchets 4 affinés 20 en sera sensiblement exempt à l'issue de l'étape D, ou en sera pourvu dans des proportions négligeable. Par exemple, les graviers et autres pierres, les métaux, le verre, les fibres papetières dégradées ou en cours de dégradation peuvent également être séparés au cours de l'étape C, de sorte que le mélange de déchets 4 affinés 20 en sera sensiblement exempt à l'issue de l'étape D, ou en sera pourvu dans des proportions négligeable.

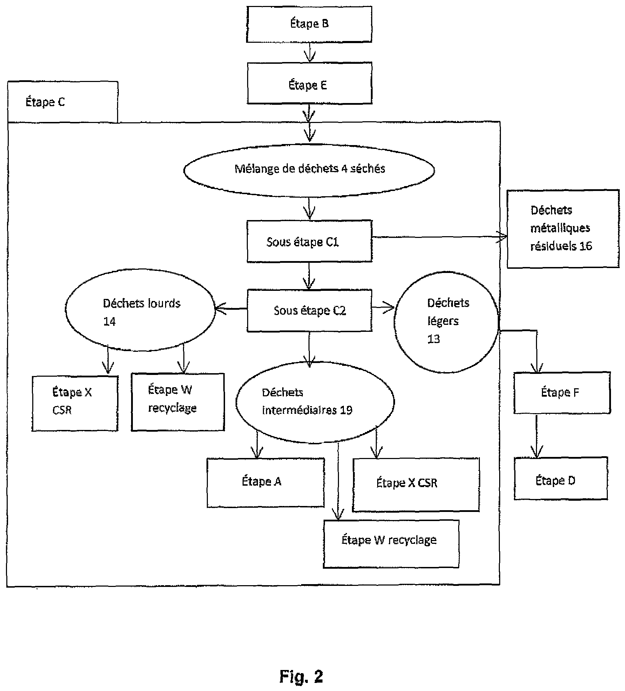

Tel qu'illustré à la figure 2, l'étape C comprend de préférence une première sous-étape C1 au cours de laquelle on sépare du mélange de déchets 4 séchés des déchets métalliques 16 résiduels qu'il contient, par exemple à l'aide d'un séparateur électromagnétique et/ou d'un séparateur à courant de Foucault, de manière à séparer au moins la majorité des déchets métalliques 16 résiduels contenus dans ledit mélange de déchets 4 séchés. On sépare ainsi avantageusement à nouveau tout élément métallique ferreux (à l'aide du séparateur magnétique) et non ferreux (à l'aide du séparateur à courant de Foucault) contenu dans le mélange de déchets 4 séchés, qui n'aurait en particulier pas été séparé au cours de l'étape Z. L'état « *séché* » des déchets facilite avantageusement une telle séparation. Cette première sous-étape C1 contribue préférentiellement à la formation d'un mélange de déchets 4 affinés 20 de bonne qualité, et notamment d'un compost satisfaisant à la norme NF U 44-051. Le procédé de traitement comprend ainsi de préférence une étape W de recyclage des déchets métalliques 16 initialement contenus dans le mélange de déchets 4. La sous-étape C1 est de préférence effectuée avant la séparation des déchets lourds et des déchets légers.

L'étape C comprend préférentiellement une deuxième sous-étape C2, au cours de laquelle on sépare le mélange de déchets 4 séchés, outre la portion de déchets lourds 14 et de déchets légers 13, en une portion de déchets intermédiaires 19 dont la masse volumique est intermédiaire, c'est-à-dire comprise entre la masse volumique des déchets des première et deuxième portions de déchets, et que l'on adjoint ladite portion de déchets intermédiaires 19 dans le mélange de déchets 4 subissant l'étape A. Les déchets intermédiaires 19, dont la masse volumique est par exemple supérieure à environ 0,6 kg/L mais inférieure à environ 0,7 kg/L, sont préférentiellement renvoyés dans un premier cycle de compostage conforme à l'étape A. En effet, il est possible que les déchets intermédiaires 19 puissent être formés par des déchets biodégradables dont la dégradation du premier cycle de compostage serait incomplète, ou dont le séchage serait incomplet. Cette deuxième sous-étape C2 permet ainsi d'améliorer la séparation entre les déchets qui entreront dans la composition du mélange de déchets 4 affinés 20, et les autres déchets.

La deuxième sous-étape C2 est préférentiellement effectuée après la sous-étape C1, et contribue à la séparation des déchets lourds et des déchets légers.

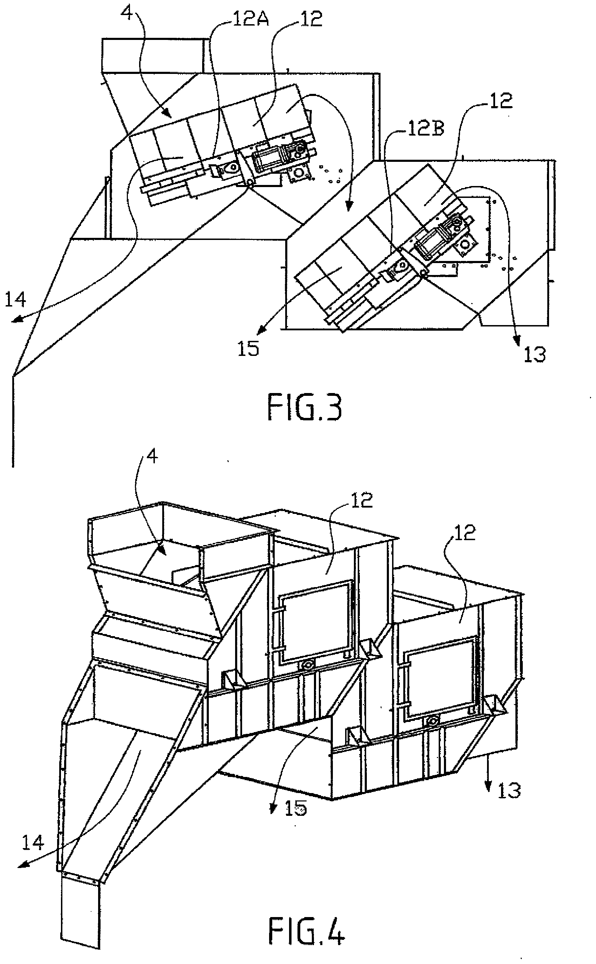

L'étape C, la première sous-étape C1 et la deuxième sous-étape C2 sont avantageusement effectuées au moins à l'aide des moyens de séparation susmentionnés, comprenant notamment un séparateur à tapis balistique 12 (tel qu'illustré par exemple aux figures 3 et 4) et un séparateur à table densimétrique associés. En l'espèce, le procédé met préférentiellement en œuvre un premier tapis balistique 12A permettant de séparer en premier la portion de déchets lourds 14, le reste du mélange de déchets 4 séchés étant dirigé vers un deuxième tapis balistique 12B permettant de séparer une portion de déchets légers 13 et une portion de déchets indéterminés 15. La portion de déchets indéterminée est avantageusement dirigée vers le séparateur densimétrique, qui permet de séparer la portion de déchets indéterminée plus finement, en particulier en séparant des déchets légers rejoignant la portion de déchets légers 13, des déchets lourds rejoignant la portion de déchets lourds 14, et la portion de déchets intermédiaires 19 décrite ci-avant.

Tel que représenté aux figures 3 et 4, le premier et le deuxième tapis balistiques 12A, 12B sont de préférence inclus dans la même machine, tel qu'illustré aux figures, le premier tapis balistique 12A alimentant directement le deuxième tapis balistique 12B par gravité. Un tapis accélérateur peut avantageusement être placé en amont du premier tapis balistique 12A de manière à accélérer le mélange de déchets 4 séchés pour les projeter sur le premier tapis balistique 12B avec une certaine énergie cinétique propre à améliorer la séparation des déchets. Le premier tapis balistique 12A et le deuxième tapis balistique 12B présentent de préférence une inclinaison dans le sens longitudinal, laquelle inclinaison est réglable, par exemple entre 20° et 70° par rapport à l'horizontale, afin de permettre de régler la séparation des déchets. Pour améliorer la séparation, le premier et/ou le deuxième tapis balistique 12A, 12B comporte de préférence une bande de roulement élastique permettant de faire rebondir et faire rouler certains types de déchets sur ladite bande de roulement (notamment les plus massifs d'entre eux), certains autres des déchets étant destinés au contraire à adhérer à la bande de roulement. La bande de roulement peut d'ailleurs avantageusement présenter des propriétés adhérentes ou collantes, notamment pour faire adhérer les déchets les plus fins. Le mélange de déchets 4 séchés comprend en particulier des fines, qui peuvent être avantageusement récupérées pour être introduites dans la portion de déchets légers 13, par exemple par raclage des tapis balistiques 12 à l'aide d'un racleur au tungstène équipant lesdits tapis balistiques (non représenté).

A l'issue de l'étape C, en particulier de la sous-étape C2, et préalablement à l'étape D, ledit procédé comporte préférentiellement une étape F au cours de laquelle on sépare de la portion de déchets légers 13, une portion de déchets grossiers 18 dont la taille excède 12 mm, par exemple à l'aide d'un trommel rotatif dont la maille permet la ségrégation d'objets dont la taille est supérieure à environ 12 mm, et d'objets dont la taille est inférieure à environ 12 mm. Les déchets grossiers 18 forment, dans ce cas, des déchets légers dont la taille est trop importante pour pouvoir entrer dans la composition du mélange de déchets 4 affinés 20, et en particulier pour former du compost répondant à la norme NF U 44-051. Tout ou partie de cette portion de déchets grossiers 18 est avantageusement concassée pour être réintroduite dans la portion de déchets légers 13 au cours de l'étape D. Alternativement, tout ou partie de cette portion de déchets grossiers 18 est préférentiellement réintroduite dans un mélange de déchets 4 subissant l'étape A. En outre, tout ou partie de cette portion de déchets grossiers 18, qui peut être formée de déchets non compostables, peut entrer dans l'étape X de fabrication de combustible solide de récupération, ou faire l'objet, si possible, de l'étape W de recyclage.

Enfin, l'étape D de l'invention permet d'affiner la décomposition des déchets organiques contenus dans le mélange de déchets 4 initial. A ce stade du procédé, le deuxième cycle de compostage est effectué sur la portion de déchets légers 13, lesquels proviennent du mélange de déchets 4 initial, qui a été dépourvu de la grande majorité, sinon de l'ensemble des déchets non conformes à la formation du mélange de déchets 4 affinés 20 final. On obtient ainsi un mélange de déchets 4 affinés 20 de bonne qualité, et susceptible de répondre à des normes particulières. Par ailleurs, à l'issue du procédé de traitement, la majeure partie, sinon l'ensemble, des déchets biodégradables du mélange de déchets 4 initial entrent dans la composition du mélange de déchets 4 affinés 20 final.

L'étape D est préférentiellement effectuée en plaçant la portion de déchets légers 13, par exemple en tas, dans au moins une deuxième baie de compostage 3, par exemple similaire à la première baie de compostage 3.

L'étape D comprend avantageusement au moins une sous-étape D1 de ré-humidification des déchets légers, par exemple avec l'humidité 6 récupérée lors de l'étape B de séchage, afin de favoriser le compostage naturel, et en particulier la maturation du compost au cours du deuxième cycle de compostage pour former le mélange de déchets 4 affinés 20. De préférence, l'étape D comprend également une aération des déchets légers, de façon par exemple similaire à l'étape A (à l'aide d'un flux d'air, ou de plusieurs retournements du tas de déchets légers) pour favoriser la formation de déchets affinés 20.

L'étape D peut également préférentiellement comprendre la réintroduction de micro-organismes dans lesdits déchets légers, provenant par exemple du premier cycle de compostage de l'étape A.

Il est ainsi possible de valoriser le mélange de déchets 4 initial en un mélange de déchets 4 affinés 20 final, formant par exemple un compost conforme à la norme NF U 44-051.

Est divulguée également, en tant que telle, une installation de traitement d'un mélange de déchets 4, ces derniers étant de tailles, de formes et de consistances hétéroclites, le mélange de déchets 4 comprenant des déchets biodégradables et des déchets non biodégradables, l'installation comprenant :
- au moins une première baie de compostage 3 permettant de faire subir un premier cycle de compostage au mélange de déchets 4 de manière à composter au moins en partie les déchets biodégradables dudit mélange de déchets 4, et à obtenir un mélange de déchets 4 pré-compostés,
- au moins une baie de séchage 2 du mélange de déchets 4 pré-compostés, permettant d'obtenir un mélange de déchets 4 séchés,
- des moyens de séparation du mélange de déchets 4 séchés au moins en une portion de déchets lourds 14 et une portion de déchets légers 13, la portion de déchets lourds 14 étant sensiblement formée par des déchets de masse volumique plus élevée que les déchets de la portion de déchets légers 13,
- au moins une deuxième baie de compostage 3 permettant de faire subir un deuxième cycle de compostage à la portion de déchets légers 13 de manière à composter au moins en partie les déchets biodégradables qu'elle contient, et à obtenir un mélange de déchets 4 affinés 20.

L'installation de traitement forme préférentiellement une usine permettant de mettre en œuvre le procédé décrit ci-avant. Dès lors, les éléments de cette installation, et notamment la première baie de compostage 3, la deuxième baie de compostage 3, la baie de séchage 2, les moyens de séparation, correspondent avantageusement à ceux décrits ci-avant.

De préférence, la première baie, et/ou la deuxième baie, comprennent des sources d'humidité 6 permettant d'humidifier le mélange de déchets 4 concerné, c'est-à-dire respectivement le mélange de déchets 4 et la portion de déchets légers 13.

De façon avantageuse, la baie de séchage 2 comprend un récupérateur 10 d'une portion de l'humidité 6 contenue dans le mélange de déchets 4 pré-compostés lors du séchage de ce dernier, le récupérateur 10 permettant d'alimenter les sources d'humidité 6 avec l'humidité 6 récupérée lors du séchage desdits déchets pré-compostés.

Le récupérateur 10 correspond avantageusement à celui décrit ci-avant, et comprend par exemple un dispositif de condensation de l'humidité 6 contenue dans l'air de séchage, qui a été extraite du mélange de déchets 4 pré-compostés. Le récupérateur 10 comprend par exemple également un dispositif de drainage des jus de compostage 11, disposé au niveau du sol 12, permettant de capter et drainer lesdits jus de compostage 11.

De préférence, la baie de séchage 2 comprend des moyens de mise en circulation d'air séchant A_{sech} au travers du mélange de déchets 4 pré-composté pour sécher ce dernier, les moyens de mise en circulation incluant au moins :
- des moyens de soufflage d'air 7 au dessus du mélange de déchets 4 pré-compostés,
- des moyens d'aspiration d'air 8 séchant en dessous du mélange de déchets 4 pré-compostés, disposés par exemple au niveau du sol 12D, sous le tas de déchets pré-compostés.

Une telle disposition permet avantageusement de créer une circulation d'air séchant A_{sech} de haut en bas propre à permettre d'effectuer un séchage du mélange de déchets 4 pré-compostés.

Le dispositif de condensation est préférentiellement placé au sein des moyens d'aspiration 7 et/ou des moyens de soufflage 8.

La baie de séchage 2 comprend préférentiellement une source de lumière 5 telle que décrite ci-avant, permettant d'irradier le mélange de déchets 4 en cours de séchage, et ainsi faciliter son séchage.

La baie de compostage 3 comprend avantageusement également une source de lumière 5 permettant d'irradier le mélange de déchets 4 en cours de compostage, et ainsi d'améliorer le compostage de ce dernier (tel qu'illustré à la figure 5), la lumière naturelle, et en particulier les rayons solaires étant propices au développement de la vie, et en particulier aux micro-organismes qui y sont sensibles.

La source de lumière 5 peut avantageusement être formée par une verrière placée à l'aplomb de la baie de compostage 3 ou de séchage 2, laissant passer la lumière du soleil et protégeant la baie des intempéries.

Une telle disposition permet avantageusement d'éviter le colmatage des moyens de mise en circulation.

L'installation comprend en outre avantageusement des moyens de traitement de l'air séchant A_{sech} ayant circulé au travers du mélange de déchets 4 pré-compostés pour le décharger sensiblement de toute émission de compostage, notamment odorante, tels que décrits par exemple ci-avant.

De préférence, les baies de compostage et les baies de séchage sont identiques, et/ou sont confondues, pour former des baies de compostage/séchage et assurer sélectivement les deux fonctions associées. Bien entendu, les baies de séchage et les baies de compostage pourront être parfaitement distinctes sans sortir du cadre de l'invention.

Tel que décrit ci-avant, les moyens de séparation incluent préférentiellement au moins un séparateur à tapis balistique 12 et un séparateur à table densimétrique associés permettant de séparer la portion de déchets lourds 14 et la portion de déchets légers 13.

Grâce à une telle installation, tout ou partie du procédé de traitement décrit ci-avant peut être effectué de préférence de manière automatisée et industrielle.

### POSSIBILITE D'APPLICATION INDUSTRIELLE

L'invention trouve son application industrielle dans la conception, la réalisation et la mise en œuvre de moyens de traitement d'un mélange de déchets de tailles, de formes et de consistances hétéroclites, le mélange comprenant des déchets biodégradables et des déchets non biodégradables.

## Revendications

1. - Procédé de traitement d'un mélange de déchets (4), ces derniers étant de tailles, de formes et de consistances hétéroclites, le mélange de déchets (4) comprenant des déchets biodégradables et des déchets non biodégradables, le procédé étant **caractérisé en ce qu'**il comporte les étapes successives suivantes :
- Étape A : on fait subir un premier cycle de compostage au mélange de déchets (4) de manière à composter au moins en partie les déchets biodégradables dudit mélange de déchets (4), et à obtenir un mélange de déchets (4) pré-compostés,
- Étape B : à l'issue du premier cycle de compostage, on fait subir un séchage au mélange de déchets (4) pré-compostés pour obtenir un mélange de déchets (4) séchés,
- Étape C : on sépare le mélange de déchets (4) séchés en au moins une portion de déchets lourds (14) et une portion de déchets légers (13), la portion de déchets lourds (14) étant formée par des déchets de masse volumique plus élevée que les déchets de la portion de déchets légers (13),
- Étape D : on fait subir un deuxième cycle de compostage à la portion de déchets légers (13) de manière à composter au moins en partie les déchets biodégradables qu'elle contient, et à obtenir un mélange de déchets (4) affinés (20).

2. - Procédé de traitement selon la revendication précédente, **caractérisé en ce qu'**au cours de l'étape A, et/ou au cours de l'étape D, on humidifie le mélange de déchets (4) concerné à l'aide de sources d'humidité (6).

3. - Procédé de traitement selon la revendication précédente, **caractérisé en ce qu'**il comporte une étape Y au cours de laquelle on récupère des jus de compostage (11) suintant du mélange de déchets pour alimenter les sources d'humidité (6).

4. - Procédé de traitement selon l'une quelconque des revendications 2 ou 3, **caractérisé en ce que** l'on récupère une portion de l'humidité (17) contenue dans le mélange de déchets (4) pré-compostés au cours de l'étape B, et que l'on alimente les sources d'humidité (6) avec la portion de l'humidité (17) ainsi récupérée.

5. - Procédé de traitement selon l'une quelconque des revendications précédentes, **caractérisé en ce que** l'étape B comprend une sous-étape B1 de mise en circulation d'un flux d'air séchant (A_{sech}) à travers ledit mélange de déchets (4) pré-compostés pour sécher ce dernier, la circulation du flux d'air séchant (A_{sech}) s'effectuant de préférence sensiblement verticalement, et de préférence encore du haut vers le bas.

6. - Procédé de traitement selon les revendications 4 et 5, **caractérisé en ce que** l'on met l'air séchant (A_{sech}) en circulation au moins à l'aide d'un soufflage d'air (7) effectué au dessus du mélange de déchets (4), de sorte que l'air séchant (A_{sech}) draine l'humidité (17) du mélange de déchets (4) pré-compostés, l'étape de récupération de la portion d'humidité étant effectuée au moins en partie par condensation de l'humidité (17) provenant du mélange de déchets (4) pré-compostés et drainée par le flux d'air séchant (A_{sech}).

7. - Procédé de traitement selon l'une quelconque des revendications précédentes, **caractérisé en ce que**, lors de l'étape A et/ou de l'étape D et/ou de l'étape B, le mélange de déchets (4) concerné est disposé en tas que l'on retourne à plusieurs reprises.

8. - Procédé de traitement selon l'une quelconque des revendications précédentes, **caractérisé en ce que**, à l'issue de l'étape B et préalablement à l'étape C, ledit procédé comporte une étape E au cours de laquelle on sépare du mélange de déchets (4) séchés une portion de déchets dont la taille est supérieure à environ 30 mm, dits déchets structurants (17), et on ajuste la concentration en déchets structurants (17) d'un deuxième mélange de déchets (4) subissant l'étape A en y adjoignant la portion de déchets structurants (17) ainsi séparée du mélange de déchets (4) séchés, de manière notamment à structurer et ensemencer le premier cycle de compostage.

9. - Procédé de traitement selon l'une quelconque des revendications précédentes, **caractérisé en ce que** l'étape C comprend une deuxième sous-étape C2 au cours de laquelle on sépare le mélange de déchets (4) séchés, outre la portion de déchets lourds (14) et de déchets légers (13), en une portion de déchets intermédiaires (19) dont la masse volumique est intermédiaire, c'est-à-dire comprise entre la masse volumique des déchets des première et deuxième portions de déchets, et que l'on adjoint ladite portion de déchets intermédiaires (19) dans le mélange de déchets (4) subissant l'étape A.

10. -Procédé de traitement selon l'une quelconque des revendications précédentes, **caractérisé en ce que** la portion de déchets légers (13) séparés au cours de l'étape C présente une masse volumique inférieure à environ 0,7 kg/L, de préférence inférieure à environ 0,6 kg/L.

11. - Procédé de traitement selon l'une quelconque des revendications précédentes, **caractérisé en ce que**, à l'issue de l'étape C et préalablement à l'étape D, ledit procédé comporte une étape F au cours de laquelle on sépare de la portion de déchets légers (13), une portion de déchets grossiers (18) dont la taille excède 12 mm.

12. -Procédé de traitement selon l'une quelconque des revendications précédentes, **caractérisé en ce que** le mélange de déchets (4) n'a subi aucun traitement et forme un mélange de déchets (4) brut, sur lequel en particulier n'a été effectué aucun broyage, ni aucun tri préalables visant à effectuer une ségrégation d'un type de déchet par rapport à un autre, et notamment à effectuer une séparation de déchets biodégradables et de déchets recyclables non biodégradables.

## Patentansprüche

1. Verfahren zur Behandlung eines Gemischs von Abfällen (4), wobei diese Letzeren von unterschiedliche Größen, Formen und Konsistenzen sind, wobei das Gemisch von Abfällen (4) biologisch abbaubare Abfälle und biologisch nicht abbaubare Abfälle aufweist, wobei das Verfahren die folgenden Schritte aufweist:
- Schritt A: das Gemisch von Abfällen (4) wird einem Kompostierungszyklus derart unterzogen, um mindestens einen Teil der biologisch abbaubaren Abfälle des Gemischs von Abfällen (4) zu kompostieren und um ein Gemisch von vorkompostierten Abfällen (4) zu erhalten,
- Schritt B: nach Ablauf des ersten Kompostierungszyklus wird das Gemisch von vorkompostierten Abfällen (4) einem Trocknen unterzogen, um ein Gemisch von getrockneten Abfällen (4) zu erhalten,
- Schritt C: das Gemisch von getrockneten Abfällen (4) wird in mindestens einen Teil von schweren Abfällen (14) und einen Teil von leichten Abfällen (13) getrennt, wobei der Teil von schweren Abfällen (14) durch Abfälle mit einer höheren Volumenmasse als die Abfälle des Teils von leichten Abfällen (13) gebildet wird,
- Schritt D: der Teil von leichten Abfällen (13) wird einem zweiten Kompostierungszyklus derart unterzogen, um die biologisch abbaubaren Abfälle, die er enthält, mindestens teilweise zu kompostieren und um ein Gemisch von verfeinerten (20) Abfällen (4) zu erhalten.

2. Verfahren zur Behandlung nach dem vorhergehenden Anspruch, **dadurch gekennzeichnet, dass** bei dem Schritt A und/oder bei dem Schritt D das betreffende Gemisch von Abfällen (4) mit Hilfe von Feuchtigkeitsquellen (6) befeuchtet wird.

3. Verfahren zur Behandlung nach dem vorhergehenden Anspruch, **dadurch gekennzeichnet, dass** es einen Schritt Y aufweist, bei dem Säfte der Kompostierung (11), die aus dem Gemisch von Abfällen (4) sickern, rückgewonnen werden, um die Feuchtigkeitsquellen (6) zu speisen.

4. Verfahren zur Behandlung nach einem der Ansprüche 2 oder 3, **dadurch gekennzeichnet, dass** ein Teil der Feuchtigkeit (17) zurückgewonnen wird, die in dem Gemisch von Abfällen (4) enthalten ist, die bei dem Schritt B vorkompostiert werden, und dass die Feuchtigkeitsquellen (6) mit dem Teil der Feuchtigkeit (17) gespeist werden, das auf diese Weise rückgewonnen wird.

5. Verfahren nach einem der vorhergehenden Ansprüche, **dadurch gekennzeichnet, dass** der Schritt B einen Unterschritt B1 des zirkulieren Lassens eines Trocknungsluftstroms (A_{sech}) durch das Gemisch von vorkompostierten Abfällen (4) aufweist, um dieses Letztere zu trocken, wobei das Zirkulieren des Trocknungsluftstroms (A_{sech}) vorzugsweise im Wesentlichen vertikal und noch bevorzugter von oben nach unten erfolgt.

6. Verfahren nach Ansprüche 4 und 5, **dadurch gekennzeichnet, dass** die Trocknungsluft (A_{sech}) mindestens mittels einer Lufteinblasung (7), die über dem Gemisch von Abfällen (4) durchgeführt wird, derart zirkulieren gelassen wird, dass die Trocknungsluft (A_{sech}) die Feuchtigkeit (17) aus dem Gemisch von vorkompostierten Abfällen (4) entzieht, wobei der Schritt der Rückgewinnung des Feuchtigkeitsteils mindestens teilweise durch Kondensation der Feuchtigkeit (17) erfolgt, die aus dem Gemisch von vorkompostierten Abfällen (4) stammt und durch den Trocknungsluftstrom (A_{sech}) entzogen wird.

7. Verfahren zur Behandlung nach dem vorhergehenden Ansprüche, **dadurch gekennzeichnet, dass** bei dem Schritt A und/oder bei dem Schritt D und/oder bei dem Schritt B das betreffende Gemisch von Abfällen (4) auf Haufen angeordnet wird, die mehrmals umgedreht werden.

8. Verfahren zur Behandlung nach einem der vorhergehenden Ansprüche, **dadurch gekennzeichnet, dass** das Verfahren nach Abschluss von Schritt B und vor dem Schritt C einen Schritt E aufweist, bei dem von dem Gemisch von getrockneten Abfällen (4) ein Teil von Abfällen getrennt wird, deren Größe größer als etwa 30 mm ist, die strukturbildende Abfälle (17) genannt werden, und die Konzentration an strukturbildenden Abfällen (17) eines zweiten Gemischs von Abfällen (4), die dem Schritt A unterzogen werden, angepasst wird, indem der Teil von strukturbildenden Abfällen (17), der auf diese Weise von dem Gemisch von getrockneten Abfällen (4) getrennt wird, derart dazu hinzugefügt wird, um insbesondere den ersten Kompostierungszyklus zu strukturieren und zu impfen.

9. Verfahren zur Behandlung nach einem der vorhergehenden Ansprüche, **dadurch gekennzeichnet, dass** der Schritt C einen zweiten Unterschritt C2 aufweist, bei dem das Gemisch von getrockneten Abfällen (4) nicht nur in den Teil von schweren Abfällen (14) und den Teil von leichten Abfällen (13), sondern auch in einen Teil von Zwischenabfällen (19) getrennt wird, dessen Volumenmasse mittelgroß ist, das heißt zwischen der Volumenmasse des ersten und des zweiten Teils von Abfällen liegt, und dadurch, dass der Teil von Zwischenabfällen (19) zu dem Gemisch von Abfällen (4) hinzugefügt wird, die dem Schritt A unterzogen werden.

10. Verfahren zur Behandlung nach einem der vorhergehenden Ansprüche, **dadurch gekennzeichnet, dass** der Teil von leichten Abfällen (13), die bei dem Schritt C getrennt werden, eine Volumenmasse aufweist, die niedriger als etwa 0,7 kg/l, vorzugsweise niedriger als etwa 0,6 kg/l ist.

11. Verfahren zur Behandlung nach einem der vorhergehenden Ansprüche, **dadurch gekennzeichnet, dass** das Verfahren nach Abschluss von Schritt C und vor dem Schritt D einen Schritt F aufweist, bei dem von dem Teil von leichten Abfällen (13) ein Teil von groben Abfällen (18) getrennt wird, deren Größe 12 mm übersteigt.

12. Verfahren zur Behandlung nach einem der vorhergehenden Ansprüche, **dadurch gekennzeichnet, dass** das Gemisch von Abfällen (4) keiner Behandlung unterzogen worden ist und ein Rohabfallgemisch (4) bildet, an dem insbesondere weder eine vorherige Zerkleinerung noch eine vorherige Sortierung durchgeführt worden ist, die darauf abzielt, eine Trennung einer Abfallart von einer anderen durchzuführen, und insbesondere eine Trennung von biologisch abbaubaren Abfällen und nicht biologisch abbaubaren recycelbaren Abfällen durchzuführen.

## Claims

1. A method for treating a mixture of wastes (4), the latter being with heterogeneous sizes, shapes and consistencies, the mixture of wastes (4) comprising biodegradable wastes and non-biodegradable wastes, the method comprising the following successive steps:
- Step A: the mixture of wastes (4) is subjected to a first composting cycle so as to compost, at least partially, the biodegradable wastes of said mixture of wastes (4), and to obtain a mixture of pre-composted wastes (4),
- Step B: upon completion of the first composting cycle, the mixture of pre-composted wastes (4) is subjected to a drying so as to obtain a mixture of dried wastes (4),
- Step C: the mixture of dried wastes (4) is separated into at least one portion of heavy wastes (14) and one portion of light wastes (13), the portion of heavy wastes (14) being formed by wastes with a volumetric mass heavier than the wastes of the portion of light wastes (13),
- Step D: the portion of light wastes (13) is subjected to a second composting cycle so as to compost, at least partially, the contained biodegradable wastes, and to obtain a mixture (4) of refined wastes (20).

2. The treatment method according to the preceding claim, **characterized in that**, during step A, and/or during step D, the concerned mixture of wastes (4) is moistened by means of moisture sources (6).

3. The treatment method according to the preceding claim, **characterized in that** it includes a step Y during which composting juices (11) oozing from the mixture of wastes are retrieved for supplying the humidity sources (6).

4. The treatment method according to any one of claims 2 or 3, **characterized in that** a portion of the moisture (17) contained in the mixture of pre-composted wastes (4) during step B is retrieved, and **in that** the humidity sources (6) are supplied with the portion of the moisture (17) retrieved accordingly.

5. The treatment method according to any one of the preceding claims, **characterized in that** step B comprises a substep B1 of circulating a drying air flow (A_{dry}) through said mixture of pre-composted wastes (4) in order to dry the latter, the circulation of the drying air flow (A_{dry}) being preferably performed substantially vertically, and still preferably from top to the bottom.

6. The treatment method according to claims 4 and 5, **characterized in that** the drying air (A_{dry}) is circulated at least by means of an air blowing (7) performed above the mixture of wastes (4), so that the drying air (A_{dry}) drains moisture (17) from the mixture of pre-composted wastes (4), the step of retrieving the portion of moisture being carried out at least partly by condensation of moisture (17) coming from the mixture of pre-composted wastes (4) and drained by the drying air flow (A_{dry}).

7. The treatment method according to any one of the preceding claims, **characterized in that**, during step A and/or step D and/or step B, the concerned mixture of wastes (4) is disposed in a heap which is turned over several times.

8. The treatment method according to any one of the preceding claims, **characterized in that**, at the end of step B and prior to step C, said method includes a step E during which, is separated from the mixture of dried wastes (4), a portion of wastes the size of which is larger than about 30 mm, called structurant wastes (17), and the concentration of structurant wastes (17) of a second mixture of wastes (4) subjected to step A is adjusted by adding therein the portion of structurant wastes (17) thus separated from the mixture of dried wastes (4), so as in particular to structure and seed the first composting cycle.

9. The treatment method according to any one of the preceding claims, **characterized in that** step C comprises a second substep C2 during which, besides the portion of heavy wastes (14) and light wastes (13), the mixture of dried wastes (4) is separated from a portion of intermediate wastes (19) the density of which is intermediate, that is to say comprised between the density of the wastes of the first and second portions of wastes, and during which said portion of intermediate wastes (19) is added in the mixture of wastes (4) subjected to step A.

10. The treatment method according to any one of the preceding claims, **characterized in that** the portion of light wastes (13) separated during step C has a density less than about 0.7 kg/L, preferably less than about 0.6 kg/L.

11. The treatment method according to any one of the preceding claims, **characterized in that**, upon completion of step C and prior to step D, said method includes a step F during which is separated from the portion of light wastes (13), a portion of coarse wastes (18) the size of which exceeds 12 mm.

12. The treatment method according to any one of the preceding claims, **characterized in that** the mixture of wastes (4) has not been subjected to any treatment and forms a raw mixture of wastes (4), on which in particular neither grinding has been carried out, nor prior sorting aiming to perform a segregation of one type of waste relative from another, and in particular to perform a separation of biodegradable wastes and non-biodegradable recyclable wastes.
